# EUROPEAN PATENT APPLICATION

(11) **EP 4 793 850 A1**
(43) Date of publication of application: **19.08.2026**
(21) Application number: 25158300.1
(22) Date of filing: 17.02.2025
(51) Int. Cl.: G06Q 10/0631, G06Q 10/0639

(54) **SYSTEM AND METHOD FOR SUSTAINABLE TASK ALLOCATION TO WORKERS IN WORK ENVIRONMENT**

(71) Applicant: Siemens Aktiengesellschaft, 80333 München (DE)
(72) Inventor: B R, Chethan Ravi, 577134 Chickmagalur District, Karnataka (IN); CARDOZ, Basil, 403110 Goa (IN); CHAITANYA, O.V.R.Krishna, 560067 Bangalore, Karnataka (IN); RR, Muralidharan, 641022 Coimbatore, Tamil Nadu (IN); SUDHAKAR LABADE, Piyush, 413736 Ahmednagar, Maharashtra (IN)
(74) Representative: HKW Intellectual Property PartG mbB

(57) **Abstract**

Disclosed is a method (100) for managing task allocation to workers in a work environment. The method involves receiving worker data, generating digital twin models of workers and tasks, and simulating assignments of worker models to task models. Results are analysed to generate ergonomic reports with key performance indicators assessing worker comfort, safety, and productivity. A worker-task matrix quantifying compatibility is determined based on these indicators. An optimization algorithm is applied to this matrix to determine an optimized task allocation. The method includes performing task allocation actions based on this optimization. The method considers physical characteristics, limitations, and skills of the workers, enabling improved worker well-being and workplace efficiency.

## Description

The present invention relates to the field of task allocation and worker management in manufacturing and industrial environments. More specifically, the invention pertains to computer-implemented methods for optimizing task allocation to workers while considering ergonomic factors and social sustainability.

In today's rapidly evolving industrial landscape, the concept of sustainability has emerged as a critical consideration for organizations. While environmental and economic aspects of sustainability are well-recognized, the social dimensions, particularly those affecting human well-being, have gained importance. Social sustainability refers to the oversight of both positive and negative impacts of systems, institutions, processes, and activities on individual and societal well-being. In manufacturing plants, social sustainability is important for ensuring workers' health, safety, and overall well-being. However, the current lack of technology-oriented solutions to measure and improve social sustainability poses a significant challenge. For instance, work-related musculoskeletal disorders (MSDs) are a major concern, accounting for approximately 33% of worker injury and illness cases in the United States, resulting in significant costs for employers. Furthermore, job satisfaction is positively correlated with employee performance and productivity, indicating that suboptimal task assignments can harm overall organizational effectiveness.

Task allocation in manufacturing and industrial environments has traditionally been a manual process overseen by plant managers. The conventional approach involves conducting interviews with workers to assess their skills and assigning tasks accordingly. This method has been widely used across various industries to distribute work and manage production processes. Social Life Cycle Assessments (LCA) techniques have also been utilized. However, these traditional approach to task allocation often overlook the physical differences and special abilities of workers, such as age, gender, anthropometric measures, and medical history. This can result in suboptimal task assignments, leading to discomfort, job dissatisfaction, work-related injuries, and ultimately, reduced productivity.

Moreover, factors related to social sustainability, such as thermal, acoustic, and lighting conditions, are generally not considered, which can negatively impact worker well-being and performance.

Some attempts have been made to address these issues by incorporating ergonomic assessments into the task allocation process. These methods often focus on physical factors such as workstation design and anthropometric measurements. Additionally, some approaches have considered factors like worker skills, age, and gender in production system modelling and design. However, these solutions still fall short of providing a comprehensive approach to task allocation that fully addresses social sustainability factors. Existing approaches often lack a systematic and quantitative method for incorporating workers' physical adaptability and limitations into the task allocation process.

Therefore, there is a need for an optimized task allocation system that considers the physical adaptability and social sustainability of workers in manufacturing environments. The present invention seeks to address these issues by managing task allocation to workers in a work environment. The proposed approach comprehensively assess workers' physical capabilities, limitations, and ergonomic factors to optimize both productivity and worker well-being. The present invention also provide means to quantify and improve social sustainability in the manufacturing environment providing long term sustainable outcome, and ensuring that tasks are distributed fairly while considering individuals' diverse capabilities and needs.

The object of the present invention is achieved by a computer-implemented method for managing task allocation to workers in a work environment. The method employs a processing unit to execute a series of steps that optimize task allocation. The method includes receiving, from a database, worker data comprising at least one of physical characteristics information, limitations information and skill sets information of workers. The method further includes generating digital twin worker models representing individual workers based on the worker data. The method further includes generating task models representing tasks in the work environment. The method further includes simulating assignment of each digital twin worker model to each task model. The method further includes processing results of the simulations to generate ergonomic analysis reports, including key performance indicators for assessing one or more of worker comfort, safety, and productivity. The method further includes determining a worker-task matrix quantifying worker-task compatibility based on the key performance indicators. The method further includes applying an optimization algorithm to the worker-task matrix to determine an optimized task allocation. The method further includes performing one or more task allocation actions based on the optimized task allocation.

In one or more embodiments, the one or more task allocation actions comprise sending an electronic notification to a user device associated with at least one of a worker or a supervisor, the electronic notification including information about the allocated task.

In one or more embodiments, the one or more task allocation actions comprise configuring equipment on which a worker is to perform an allocated task, based on the worker data associated with the worker.

In one or more embodiments, the method further comprises capturing, from an imaging source, video data and/or point cloud data of the work environment. The method then comprises generating the task models by utilizing the video data and/or point cloud data.

In one or more embodiments, the task models are generated based on the video data and/or point cloud data captured from assembly operations, logistics operations, quality inspection, and maintenance activities in the work environment.

In one or more embodiments, the method further comprises training workers on the tasks allocated based on the optimized task allocation in a virtual reality and/or an augmented reality environment. The method then comprises evaluating worker performance in the virtual reality environment and/or the augmented reality environment to validate the optimized task allocation.

In one or more embodiments, the method further comprises adjusting one or more parameters of the digital twin worker models based on the evaluation of worker performance in the virtual reality environment and/or the augmented reality environment. The method then comprises re-executing the simulation of the assignment, generation of the ergonomic analysis reports, and application of the optimization algorithm using the modified digital twin worker models to update the optimized task allocation.

In one or more embodiments, the key performance indicators comprise a weighted ergonomic score quantifying overall ergonomic performance of each task allocation scenario and a work environment score based on thermal conditions, acoustic conditions, and lighting conditions. Herein, the weighted ergonomic score is user-defined or pre-defined.

In one or more embodiments, the physical characteristics information comprises at least one of age, gender, height, weight, body dimensions, reach, and strength. The limitations information comprises at least one of physical limitations, cognitive limitations, and sensory limitations. The skill sets information comprises at least one of experience level, certifications, training history, and tools or equipment proficiency details.

The object of the present invention is also achieved by a system comprising a database storing worker data, one or more input devices configured to receive video data and/or point cloud data of a work environment, one or more processing units, and a memory unit communicatively coupled to the one or more processing units. Herein, the memory unit comprises a task allocation optimization module stored in the form of machine-readable instructions executable by the one or more processing units. Herein, the task allocation optimization module is configured to perform aforementioned method steps for managing task allocation to workers in a work environment.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for managing task allocation to workers in a work environment, in accordance with one or more embodiments of the present invention;
FIG 2 is a block diagram representation of a system for managing task allocation to workers in a work environment, in accordance with one or more embodiments of the present invention; and
FIG 3 is a flowchart depicting of a process for managing task allocation to workers in a work environment, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing task allocation to workers in a work environment are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Task allocation refers to the process of assigning specific work activities or responsibilities to individual workers within a manufacturing or industrial setting. In the present context, task allocation involves the systematic distribution of tasks based on various factors including workers' physical characteristics, limitations, and skill sets, as well as ergonomic considerations and environmental conditions. Task allocation in this system is dynamic, meaning it continuously adapts to real-time data about workers' conditions and environmental factors to optimize both operational efficiency and worker safety.

Workers, in this context, are individuals employed in a manufacturing or industrial environment who are responsible for performing various tasks as part of the production process. These individuals possess diverse physical characteristics, medical histories, limitations, and skill sets that are considered in the task allocation process. Work environment refers to the physical space and conditions in which workers perform their assigned tasks. In the present invention, this encompasses not only the immediate workspace but also includes factors such as thermal conditions, acoustic conditions, and lighting conditions. The work environment may include various operational areas such as assembly lines, logistics operations, quality inspection stations, and maintenance areas within a manufacturing or industrial facility.

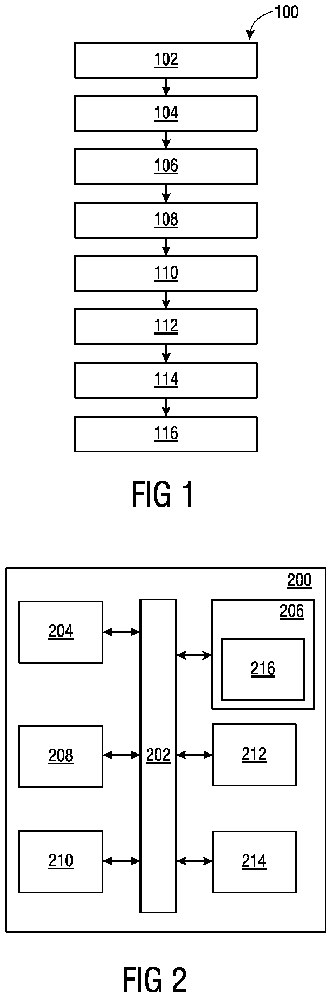

Referring to FIG 1, illustrated is a flowchart of a method (as represented by reference numeral 100) for managing task allocation to workers in a work environment, in accordance with an embodiment of the present invention. The method 100 utilizes digital twin technology, simulation techniques, and optimization algorithms to create a task allocation system that considers workers' individual characteristics and limitations. The method 100 also includes utilizing metaverse technologies for interactive worker training, enabling a closed-loop system where worker performance in training is used to validate and refine task allocation algorithms. The method 100 aims to create a socially sustainable work environment in manufacturing plants

Referring to FIG 2, illustrated is a block diagram of a system 200 for managing task allocation to workers in a work environment, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for managing task allocation to workers in a work environment. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for managing task allocation to workers in a work environment. In particular, the memory unit 206 includes a task allocation optimization module 216 to perform steps for the said purpose.

Referring to FIGS 1-2 in combination, various steps of the method 100 (as described hereinafter), which may be executed in the system 200, or specifically in the processing unit 204 of the system 200, for managing task allocation to workers in a work environment, are described. The method 100 employs the processing unit 204 to execute a series of steps that optimize the performance of solver methods on hardware platforms. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes receiving, from a database, worker data comprising at least one of physical characteristics information, limitations information and skill sets information of workers. This step involves collecting data about each worker that will be considered in the task allocation process. The database (which may be the dataset 210) from which this worker data is received may be a centralized repository of worker information maintained by the organization. The database may be continuously updated to reflect changes in worker status, such as new certifications acquired or changes in medical conditions. The method 100 involves accessing this database to retrieve the most up-to-date information about each worker, ensuring that the subsequent task allocation process is based on accurate and current data.

Herein, the physical characteristics information may comprise at least one of age, gender, height, weight, body dimensions, reach, and strength. The physical characteristics information provides a baseline understanding of the worker's physical attributes that may impact their ability to perform certain tasks. For example, a worker's height and reach may affect their suitability for tasks involving high shelves or large machinery. In some examples, the medical information may also be used which can include at least one of medical history, allergies, existing injuries, and chronic conditions. The medical information allows for ensuring that workers are not assigned tasks that could exacerbate existing medical conditions or put them at risk. For instance, a worker with a history of back problems may not be suitable for tasks involving heavy lifting. The limitations information may comprise at least one of physical limitations, cognitive limitations, and sensory limitations. The limitations information provides details about any restrictions or challenges a worker may face that could impact their ability to perform certain tasks safely or efficiently. For example, a worker with limited mobility in their arms may not be suitable for tasks requiring fine motor skills. The skill sets information may comprise at least one of experience level, certifications, training history, and tools or equipment proficiency details. The skill sets information helps ensure that workers are assigned tasks that align with their expertise and qualifications. For instance, a worker with specialized training in operating a particular piece of machinery would be preferentially assigned to tasks involving that equipment.

At step 104, the method 100 includes generating digital twin worker models representing individual workers based on the worker data. Digital twin worker models are virtual representations of each worker that accurately reflect their physical characteristics, limitations, and capabilities. The digital twin worker models incorporate all the relevant information from the worker data, including physical attributes, medical history, limitations, and skill sets. For each worker, a digital twin model is created that includes parameters representing the worker's height, weight, reach, and range of motion. The digital twin worker models also include flags for any medical conditions or limitations that need to be considered in task allocation. The digital twin worker models incorporates physics-based simulations to represent physical properties and capabilities of individual workers. This physics-based approach allows for accurate ergonomic assessments and enables the simulation of complex tasks by respective workers.

The generation of digital twin worker models involves translating the raw worker data into a structured digital format that can be used in subsequent simulation and analysis steps. For example, the physical characteristics information is used to create a virtual avatar with the correct dimensions and physical properties. The medical information and limitations information are encoded as attributes or constraints associated with this avatar. The skill sets information is represented as a set of capabilities or proficiency levels for various tasks or equipment. These digital twin worker models serve as digital avatars of the real workers, allowing for further simulations and analyses. Herein, available avatars can be used and parametric model can be fine-tuned to get specific model. For example, the physical characteristics information can be used to create (calibrate) a virtual avatar with the correct dimensions and physical properties. The digital twin worker models can be manipulated and tested in virtual scenarios to predict how the actual workers would perform in various task situations, for considerations of worker capabilities and limitations in the task allocation process.

In the present embodiments, the digital twin worker models are not static representations but can be updated as new information becomes available. For instance, if a worker completes additional training or experiences a change in their physical condition, the corresponding digital twin worker model can be modified to reflect these changes. This ensures that the task allocation process always uses the most current and accurate representation of each worker's capabilities and limitations.

At step 106, the method 100 includes generating task models representing tasks in the work environment. These task models are virtual representations of the various tasks that need to be performed in the workplace. The task models include detailed information about the physical requirements, skill requirements, and ergonomic considerations of each task. The task models include information such as the physical space required for the task, the movements involved, the tools or equipment used, and the environmental conditions under which the task is typically performed. For example, a task model for an assembly operation may include the dimensions of the workstation, the sequence of movements required, the weight and size of components handled, and any specific environmental factors like lighting or temperature requirements. These task models serve as a virtual representation of the work to be done, allowing for detailed analysis and simulation of how different workers may perform each task.

The generation of the task models involves creating a digital representation of each task, including its spatial characteristics, physical demands, and environmental factors. The task models may be generated based on various data sources, including existing task descriptions, ergonomic analyses, and real-world observations. Such use of comprehensive data ensures that the task models accurately reflect the full range of activities performed in the workplace.

In some implementations, the method 100 involves capturing, from an imaging source, video data and/or point cloud data of the work environment. This data capture process involves using video recording devices and 3D scanning technology to collect detailed information about the physical layout and activities within the work environment. In an example, the imaging source may include one or more devices capable of capturing visual or spatial data of the work environment, including, but not limited to, video cameras, depth sensors, LIDAR (Light Detection and Ranging) devices, stereoscopic cameras, time-of-flight cameras, structured light scanners, or any combination thereof. These devices may be stationary, mounted at fixed positions within the work environment, or mobile, such as handheld devices or devices mounted on movable platforms or robots. The imaging source is configured to capture visual and/or spatial data of the work environment, including the layout, equipment, and ongoing activities, to facilitate the creation of accurate task models.

The method 100 then utilizes the video data and/or point cloud data to generate the task models. The video data provides dynamic information about the movements and processes involved in various tasks, while the point cloud data provides a three-dimensional representation of the work environment and the objects within it. This step may utilize a plant simulation application, as known in the industry (for instance, Tecnomatix^{®}) and not discussed herein in detail for brevity of the present disclosure. By utilizing such detailed video data and/or point cloud data, the method 100 generates task models that reflect the physical requirements of each task as well as the spatial context in which these tasks are performed. These task models enable simulations and analyses in the subsequent steps of the task allocation process, for optimized allocation of tasks to workers.

Specifically, the task models are generated based on the information from video data and/or point cloud data captured from assembly operations, logistics operations, quality inspection, and maintenance activities in the work environment. This approach ensures that the task models accurately represent the full spectrum of tasks performed in the workplace. For assembly operations, the video data may capture the sequence of actions workers perform to assemble a product, while the point cloud data provides exact measurements of the assembly area and the components involved. In logistics operations, the video and point cloud data may include the paths workers take when moving materials, the layout of storage areas, and the dimensions of transport equipment. For quality inspection tasks, the video and point cloud data may include the specific movements and tools used in inspection processes, as well as the lighting conditions and workspace layout. For maintenance activities, the video and point cloud data may include the physical access points for equipment, the tools and movements required for common maintenance tasks, and any environmental factors that affect these tasks. Such varied data sources allows for a highly accurate representation of the physical workspace and the tasks performed within it.

At step 108, the method 100 includes simulating assignment of each digital twin worker model to each task model. This simulation process involves virtually pairing each worker model with each task model and evaluating the compatibility and potential outcomes of these pairings. The simulation process may consider all the parameters of both the worker models and the task models. For the worker models, this may include physical characteristics such as height, weight, and reach, as well as any medical conditions, limitations, and skill sets. For the task models, the simulation process may consider the physical requirements of the task, the spatial layout of the work area, the tools or equipment involved, and any environmental factors such as lighting or temperature.

During the simulation process, the method 100 involves assessing how well each worker model matches with each task model. For instance, the simulation process may evaluate whether a worker's reach is sufficient for a particular assembly task, or whether a worker's medical condition may get worsened by the repetitive motions required in a specific logistics operation. The simulation process may also consider the skill sets of the worker in relation to the requirements of the task. The simulation process, thereby, pairs every worker model with every task model to explore all possible combinations. This approach ensures that no potential optimal pairing is overlooked. For each pairing, the simulation process generates data on various aspects of the hypothetical task performance, such as efficiency, ergonomic impact, and potential safety concerns. This data forms the basis for the subsequent steps of analysis and optimization in the task allocation process.

It may be contemplated by a person skilled in the art that while the method 100 is described as simulating the assignment of each digital twin worker model to each task model; in practical implementations, the simulation process may employ optimization techniques to reduce computational load. These techniques may involve preliminary filtering or pre-screening of worker-task combinations based on predefined criteria. For example, if a task requires a specific certification that a worker does not possess, the simulation may exclude this pairing without performing a full analysis. Similarly, if a worker's physical limitations clearly preclude them from performing a particular task, such as a height requirement for operating certain machinery, that combination may be eliminated from the simulation pool. This approach allows the method to focus computational resources on more viable worker-task pairings, potentially improving the efficiency of the overall task allocation process while still providing comprehensive evaluation of suitable combinations.

At step 110, the method 100 includes processing results of the simulations to generate ergonomic analysis reports, including key performance indicators for assessing one or more of worker comfort, safety, and productivity. This step translates the raw simulation data into actionable insights about the suitability of different worker-task pairings. The ergonomic analysis reports generated by the method 100 include various metrics and assessments. These reports evaluate factors such as posture, force exertion, repetition, and duration for each simulated worker-task pairing. This may be used to flag potential ergonomic risks or areas of concern, such as tasks that require awkward postures or excessive force for a particular worker. Further, the key performance indicators provide quantitative measures of worker comfort, safety, and productivity for each simulated pairing. These ergonomic analysis reports provide an assessment of the potential impact of each worker-task pairing on worker well-being and productivity. The method 100 uses this information to inform the subsequent steps of determining worker-task compatibility and optimizing task allocation.

In some examples, the method 100 for managing task allocation to workers in a work environment employs Tecnomatix Process Simulate^{®} as a simulation tool for human task simulation and ergonomic analysis. When generating digital twin worker models, the method 100 utilizes anthropometry data including height, weight, and age as inputs to create accurate human models. The method 100 then creates task models representing various operations such as pick, drop, and push trolley operations using specific features within the tool designed for creating worker operations. The simulation is executed for these created operations, followed by comprehensive ergonomic analysis of the tasks. Following table (Table 1) provides given action category for OWAS.

**Table 1: OWAS - Action category given**

| **Category** | **Action category/level** | **Explanation** |
|---|---|---|
| **1** | Normal posture | Normal positions that do not require any special caution |
| **2** | Not too much forced | During the next regular check of working methods, stops must be considered |
| **3** | Too load and force | Positions must be taken into consideration soon |
| **4** | Loading and forcing too much | Positions need to be evaluated immediately |

The ergonomic analysis reports generated by the method 100 include multiple quantitative measurements as outputs from the simulation. These measurements comprise metabolic energy expenditure measured in Kcal/min, joint forces measured in Newtons (N), Ovako Working Posture Analysis System (OWAS) with specified action categories, joint angles summary measured in degrees, joint torque measured in Newton-meters (NM), cumulative back load compression measured in Newtons (N), and cycle time measured in seconds. These detailed measurements contribute to the key performance indicators used for assessing worker comfort, safety, and productivity, and form the basis for determining the worker-task matrix quantifying worker-task compatibility. The comprehensive nature of these measurements enables the optimization algorithm to determine task allocations that consider both the physical demands of tasks and the capabilities of workers in precise, quantifiable terms.

In present implementations, the ergonomic analysis reports include at least one ergonomic metric selected from a group consisting of: Rapid Upper Limb Assessment (RULA), National Institute for Occupational Safety and Health (NIOSH) guidelines, metabolic energy expenditure, low back analysis, cumulative low back assessment, and strain index. The RULA is used to evaluate the exposure of individual workers to ergonomic risk factors associated with upper extremity disorders. The method 100 applies this assessment to each simulated worker-task pairing to identify potential risks related to posture, force, and repetition in tasks involving the arms, wrists, neck, and trunk. The NIOSH guidelines are utilized to assess lifting tasks. The method 100 applies these guidelines to evaluate the safety of lifting activities in the simulated worker-task pairings, considering factors such as the weight of objects, frequency of lifts, and the horizontal and vertical locations involved in the lift. The metabolic energy expenditure is calculated to estimate the physical workload of tasks. The method 100 uses this metric to assess the energy demands of different tasks and how they align with the capabilities of individual workers. The low back analysis and the cumulative low back assessment are employed to evaluate the risk of lower back injuries. The method 100 applies these analyses to tasks involving bending, twisting, or lifting, assessing the potential impact on workers' lower back health over time. The strain index is used to evaluate the risk of developing distal upper extremity disorders. The method 100 applies this index to tasks involving repetitive hand and wrist motions, considering factors such as intensity of exertion, duration of exertion, and hand/wrist posture.

Further, the key performance indicators comprise a weighted ergonomic score quantifying overall ergonomic performance of each task allocation scenario and a work environment score based on thermal conditions, acoustic conditions, and lighting conditions. The weighted ergonomic score is a weighted sum measure that takes into account various ergonomic factors, such as posture, force, repetition, and duration. A higher score indicates better ergonomic conditions and potentially greater worker comfort and safety. For example, a task that allows a worker to maintain a neutral posture and involves minimal repetitive motions may receive a high weighted ergonomic score. Herein, the weighted ergonomic score is user-defined or pre-defined. That is, in some examples, these weights may be defined by the user (such as, work manager); and in other cases, those may be predefined as per standards or organization needs. The work environment score considers factors beyond the immediate physical interactions of the worker and task. By incorporating thermal conditions, acoustic conditions, and lighting conditions, this score accounts for the broader environmental factors that can significantly impact worker comfort and productivity. For instance, a task performed in an environment with poor lighting or excessive noise may receive a lower work environment score, even if the physical ergonomics of the task are favourable.

At step 112, the method 100 includes determining a worker-task matrix quantifying worker-task compatibility based on the key performance indicators. This step involves creating a representation of how well each worker is suited to each task, considering all the factors analysed in the previous steps. The worker-task matrix is structured with workers on one axis and tasks on the other. Each cell in the matrix contains a compatibility score or set of scores derived from the ergonomic analysis reports and key performance indicators. These scores quantify the suitability of each worker for each task based on the simulated performance and ergonomic assessments. The resulting worker-task matrix provides a quantitative representation of the compatibility between each worker and each task, based on an assessment of ergonomic factors and environmental conditions.

Herein, the compatibility scores in the worker-task matrix incorporate the weighted ergonomic score and the work environment score for each worker-task pairing. The weighted ergonomic score, which quantifies the overall ergonomic performance of each task allocation scenario, helps in determining the compatibility between a worker and a task. A higher weighted ergonomic score indicates a better match between the worker's physical capabilities and the ergonomic demands of the task. The work environment score, based on thermal conditions, acoustic conditions, and lighting conditions, is also factored into the compatibility assessment. This score reflects how well a worker might perform in the specific environmental conditions associated with each task. For example, a worker who is sensitive to noise might have a lower compatibility score for tasks in areas with high acoustic levels, even if the physical demands of the task are well-suited to their capabilities. The method 100 may apply weighting factors to different components of these scores based on their relative importance in the specific work environment. For instance, in a workplace where noise levels vary significantly between different areas, the acoustic conditions component of the work environment score may be given greater weight in determining overall compatibility.

At step 114, the method 100 includes applying an optimization algorithm to the worker-task matrix to determine an optimized task allocation. This step aims to find the best overall allocation of tasks to workers, considering the individual worker-task compatibilities as well as the overall efficiency and ergonomic quality of the entire workplace. The optimization algorithm takes the worker-task matrix as input. As discussed, the worker-task matrix incorporates the compatibility scores for each worker-task pairing, derived from the ergonomic analysis reports and key performance indicators. The optimization algorithm processes this matrix to determine the most effective assignment of tasks to workers across the entire work environment. The optimization process considers multiple objectives simultaneously, which may include maximizing overall worker comfort and safety, minimizing the risk of work-related injuries, ensuring all necessary tasks are allocated, and maintaining or improving overall productivity. The optimization algorithm may consider additional constraints, such as ensuring a fair distribution of tasks among workers or meeting specific production targets.

It may be understood that the optimization algorithm may employ various mathematical techniques, such as linear programming, integer programming, or heuristic algorithms, depending on the complexity of the problem and the specific constraints and objectives of the work environment. For example, in a work environment with a large number of workers and tasks, a heuristic algorithm may be used to find a near-optimal solution within a reasonable computation time. During the optimization process, the algorithm evaluates numerous potential task allocation scenarios. For each scenario, it calculates an overall score based on the compatibility scores from the worker-task matrix and any additional objectives or constraints. The optimization algorithm iteratively refines these scenarios, aiming to maximize the overall score and find the best possible task allocation.

The output of this optimization step is an optimized task allocation plan. This optimized task allocation plan specifies which tasks should be assigned to each worker to achieve the best overall outcome in terms of worker well-being, safety, and productivity. The optimized task allocation plan takes into account the individual characteristics and limitations of each worker, the ergonomic demands of each task, and the environmental conditions of the work environment.

At step 116, the method 100 includes performing one or more task allocation actions based on the optimized task allocation. The task allocation actions serve to implement the optimized task allocation plan in the real-world work environment, i.e., into practical task assignments. In other words, these task allocation actions serve to bridge the gap between the optimized digital task allocation plan and its practical implementation in the physical work environment. By performing these actions, the method 100 ensures that the benefits of the optimized task allocation, including, but not limited to, improved worker comfort, reduced fatigue for workers, safety, and productivity are realized in practice in the real-world work environment.

In an implementation, the one or more task allocation actions comprise sending an electronic notification to a user device (such as, the output device 214) associated with at least one of a worker or a supervisor, the electronic notification including information about the allocated task. This action ensures that workers and supervisors are immediately informed about task assignments. The electronic notification may be sent via email, text message, or through a dedicated workplace management application. The notification includes details about the task to be performed, its location, any special instructions, and potentially the rationale behind the assignment based on the worker's capabilities and the task's requirements.

In another implementation, the one or more task allocation actions comprise configuring equipment on which a worker is to perform an allocated task, based on the worker data associated with the worker. This action utilizes the detailed worker data collected earlier in the process to customize the work environment for each worker. For example, if a worker has been assigned to a task involving an adjustable workstation, the workstation may be automatically configured to match the worker's height and reach capabilities. Similarly, if a worker has certain physical limitations, safety features or assistance mechanisms on relevant equipment may be activated or adjusted accordingly.

In yet another implementation, the method 100 may also involve performing actions to prepare the work environment for the allocated tasks. This may involve adjusting lighting levels, temperature settings, or noise reduction measures based on the work environment scores that were factored into the task allocation optimization. In still other implementations, the task allocation actions may include updating a central scheduling system or database to reflect the new task assignments. This ensures that all relevant parties, including management, logistics teams, and other workers, are aware of the current task allocation.

In some embodiments, the method 100 further comprises training workers on the tasks allocated based on the optimized task allocation in a virtual reality and/or an augmented reality environment. This training step allows workers to familiarize themselves with their assigned tasks in a simulated environment before performing them in the real world. In the virtual reality environment, workers are immersed in a digital representation of their work environment. This virtual environment is created based on the same digital twin models used in the earlier simulation steps, providing a highly accurate representation of the actual work environment and tasks. Workers can interact with virtual representations of tools, equipment, and materials they will use in their assigned tasks. In the augmented reality environment, digital information is overlaid on the real work environment. Workers can view task instructions, safety reminders, or ergonomic guidance superimposed on their actual workspace. This allows for context-specific training that directly relates to the physical environment in which tasks will be performed.

The method 100 then proceeds to evaluating worker performance in the virtual reality environment and/or the augmented reality environment to validate the optimized task allocation. This evaluation step serves as a feedback mechanism, for assessing the accuracy and effectiveness of task allocation decisions. During the evaluation process, various performance metrics are measured, such as task completion time, accuracy, and adherence to safety protocols. The method 100 may also involve collecting subjective feedback from workers about their comfort and perceived difficulty of the assigned tasks. This evaluation data provides valuable insights into the real-world effectiveness of the optimized task allocation.

Such performance evaluation in the virtual or augmented reality environment allows for a safe and controlled assessment of worker capabilities and task suitability. This approach provides an opportunity to identify any potential issues or areas for improvement before tasks are performed in the actual work environment. This approach further helps to validate the assumptions made during the task allocation optimization process and ensures that the allocated tasks are actually matched to each worker's capabilities and limitations.

In a further embodiment, the method 100 also comprises adjusting one or more parameters of the digital twin worker models based on the evaluation of worker performance in the virtual reality environment and/or the augmented reality environment. As used herein, "one or more parameters of the digital twin worker models" refers to specific, quantifiable attributes or characteristics within the digital representation of individual workers that can be adjusted based on observed performance. These parameters may include physical capability, task proficiency, cognitive processing speed, safety compliance, environmental sensitivity, and the like. This step allows to refine and update understanding of each worker's capabilities based on their actual performance in simulated tasks. The modification of digital twin worker models may involve adjusting the parameters and attributes of these models to reflect the observed performance of workers in the virtual or augmented reality environment. For example, if a worker performs better than expected on a particular type of task in the virtual environment, the corresponding digital twin model may be updated to reflect this increased capability. Conversely, if a worker struggles with an assigned task, the corresponding model may be adjusted to indicate a lower suitability for similar tasks in the future.

The method 100 then proceeds to re-executing the simulation of the assignment, generation of the ergonomic analysis reports, and application of the optimization algorithm using the modified digital twin worker models to update the optimized task allocation. This creates a feedback loop that continuously refines and improves the task allocation process based on real-world performance data. Herein, the re-execution of the simulation involves running the updated digital twin worker models through the same process of pairing with task models. This new simulation takes into account the modified capabilities and limitations reflected in the updated worker models. Following the simulation, new ergonomic analysis reports are generated based on the results of the updated simulation. These reports reflect any changes in the predicted ergonomic outcomes resulting from the modifications to the worker models. Finally, the optimization algorithm is applied again, using the new worker-task matrix derived from the updated simulation and ergonomic analysis. This results in an updated optimized task allocation that takes into account the newly observed capabilities and limitations of the workers.

This iterative process allows the method 100 to adapt to changes in worker capabilities over time, as well as to refine its understanding of the relationships between worker characteristics and task performance. This process further ensures that the task allocation remains optimized even as workers develop new skills, recover from injuries, or experience changes in their physical capabilities.

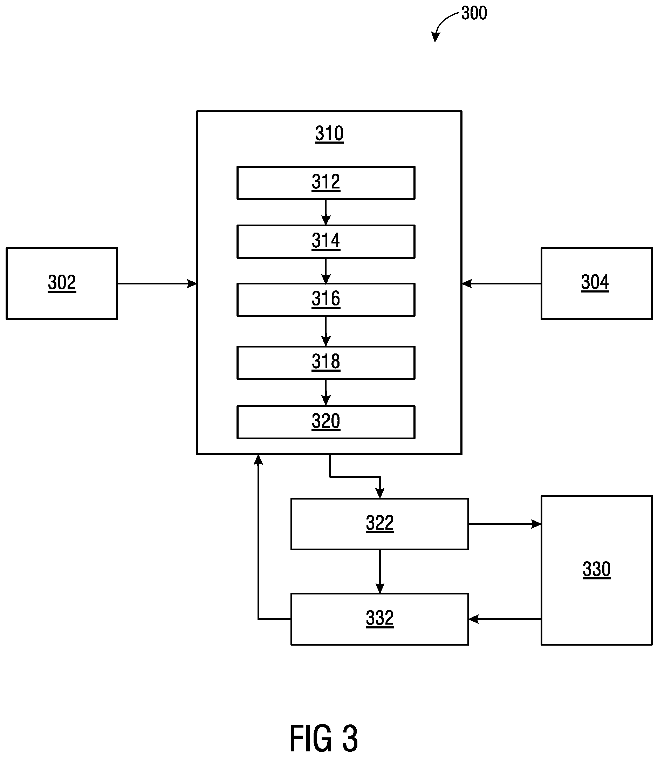

Referring to FIG 3, illustrated is a flowchart depicting of a process 300 for managing task allocation to workers in a work environment. The process 300 includes multiple steps, each contributing to the overall goal of optimizing task allocation while considering worker characteristics and ergonomic factors. The process 300 integrates various advanced technologies and methodologies, including digital twin modelling, simulation techniques, ergonomic analysis, and virtual reality training, to create a sophisticated task allocation system. The process considers a wide range of worker characteristics and task requirements, with the aim to match workers with tasks that are best suited to their individual capabilities and limitations.

The process 300 involves receiving worker data (as represented by reference numeral 302) from a database. The worker data 302 includes at least one of physical characteristics information, limitations information, and skill sets information of workers. The worker data 302 is retrieved from a centralized database that stores comprehensive information about each worker in the work environment. The worker data 302 may help to differentiate workers in terms of physical capabilities, skillset, medical history, allergies, age, gender, anthropometric measures, and the like.

The process 300 further involves receiving operational data (as represented by reference numeral 304) for the work environment. The operational data 304 includes detailed information about various activities and processes within the work environment, such as assembly operations, logistics operations, quality inspection, and maintenance activities. The operational data 304 helps in understanding the tasks that need to be allocated and the conditions under which they are performed. For green field projects, where a new work environment is being set up, the operational data 304 may be derived from a readily available 3D factory model. This model provides a virtual representation of the planned work environment, including the layout, equipment, and anticipated workflow. In the case of brown field projects, involving existing work environments, the operational data 304 may be collected through various means, including video analytics, where cameras capture the actual operations in the workplace, and point cloud data, which provides a detailed three-dimensional representation of the physical space and objects within it.

The process 300 involves a recommendation engine 310 which receives the worker data 302 and the operational data 304 and executes various processing steps thereon. At step 312, the recommendation engine 310 generates digital twin worker models representing individual workers based on the worker data 302. These digital twin worker models are virtual representations of each worker, incorporating their physical attributes, medical history, limitations, and skill sets. Further, the recommendation engine 310 generates task models representing tasks in the work environment. These task models are created based on the operational data 304 for the factory line, including assembly operations, logistics operations, quality inspection, and maintenance activities.

At step 314, the recommendation engine 310 simulates the assignment of each digital twin worker model to each task model. This simulation process evaluates the compatibility of workers with different tasks based on their characteristics and the task requirements. The simulation takes into account the physical attributes, limitations, and skills of each worker as represented in their digital twin model, and assesses how well they match with the requirements and conditions of each task as defined in the task models.

At step 316, the recommendation engine 310 analyses the results of the simulations to generate ergonomic analysis reports. These reports include key performance indicators for assessing worker comfort, safety, and productivity. The ergonomic analysis may incorporate various established ergonomic assessment methods and metrics, such as Rapid Upper Limb Assessment (RULA), National Institute for Occupational Safety and Health (NIOSH) guidelines, metabolic energy expenditure calculations, and low back analysis. These reports provide an evaluation of the potential ergonomic impacts of each worker-task pairing.

At step 318, the recommendation engine 310 extracts key performance indicators (KPIs) from the ergonomic analysis reports generated in the previous step. These KPIs provide quantitative measures of worker comfort, safety, and productivity for each simulated worker-task pairing. The KPIs may include a weighted ergonomic score that quantifies the overall ergonomic performance of each task allocation scenario. This score is typically an aggregate measure derived from various ergonomic metrics evaluated in the analysis reports. Additionally, the KPIs may include a work environment score based on factors such as thermal conditions, acoustic conditions, and lighting conditions in the work area. These KPIs serve as inputs for the subsequent task allocation optimization process, providing a standardized basis for comparing and evaluating different worker-task combinations.

At step 320, the recommendation engine 310 executes an optimization allocation algorithm to determine an optimized task allocation. This involves applying the optimization algorithm to the worker-task matrix, which was created based on the extracted KPIs. The optimization algorithm aims to find the best overall allocation of tasks to workers, considering the individual worker-task compatibilities, and the overall ergonomic quality of the entire workplace. The optimization algorithm (such as, job scheduling optimization algorithms) evaluates numerous potential task allocation scenarios, calculating an overall score for each based on the KPIs and any additional objectives or constraints. In preset examples, operators can decide the weights for different parameters; and if not, predefined values can be used based on expert opinion. Through this process, the optimization algorithm determines an optimized task allocation plan that specifies which tasks should be assigned to each worker to achieve the best overall outcome in terms of worker well-being, safety, and productivity.

At step 322, the process 300 generates task data for workers based on the optimized task allocation determined by the task allocation algorithm. This task data includes detailed information about the specific tasks assigned to each worker, including the nature of the task, its location, duration, required tools or equipment, and any special instructions or safety precautions. The task data is tailored to each individual worker, taking into account their specific capabilities, limitations, and the ergonomic considerations identified in the previous steps.

The process 300 then involves the use of a metaverse environment (as represented by reference numeral 330) for training workers on their allocated tasks. The metaverse environment 330, which may involve virtual reality or augmented reality environment, provides an immersive and interactive platform for workers to familiarize themselves with their assigned tasks before performing them in the real world. The metaverse environment 330 is created based on the digital twin models of the work environment and tasks, ensuring a high degree of accuracy and relevance. Workers can practice their assigned tasks, interact with virtual representations of tools and equipment, and receive real-time feedback and guidance.

At step 332, the process 300 evaluates and validates the outcomes of the task allocation and training. This step involves assessing worker performance in the metaverse environment 330 and comparing it to the expected outcomes predicted by the earlier simulations and ergonomic analyses. The evaluation may include metrics such as task completion time, accuracy, adherence to safety protocols, and the worker's comfort level with the assigned tasks. This serves to validate the effectiveness of the task allocation and identify any discrepancies between predicted and actual performance.

The process 300 incorporates a feedback loop, as indicated by the arrow leading from step 332 back to the earlier stages thereof. This feedback loop allows for continuous refinement and improvement of the process 300 for task allocation. If the evaluation and validation step reveals any issues or areas for improvement, this information can be fed back into the system. The digital twin worker models may be updated based on the observed performance, the task allocation algorithm may be fine-tuned, or additional training may be prescribed. This iterative approach ensures that the process 300 remains dynamic and responsive to changing worker capabilities and workplace conditions, continuously optimizing for both worker well-being and overall productivity.

In an exemplary implementation of the method 100 (or the process 300) for managing task allocation to workers in a work environment, three different human models and three tasks were considered as a demonstrator. The human models included "Jack model 1," "Jill model," and "Jack model 2," representing workers with varying anthropometric data, age, and gender, were created in a simulation software. The three tasks simulated were: (1) pick and drop of a part, (2) bolt tightening of a hinge part, and (3) trolley movement. The method 100 simulated each human model performing each of the three tasks. For all combinations of human models and tasks, the method 100 generated ergonomics analysis reports. The ergonomic results, along with environmental factors, were then input into a task allocation algorithm. This algorithm evaluated all conditions and generated a worker-task matrix quantifying worker-task compatibility. Based on this matrix, the task allocation algorithm determined an optimized task allocation.

The output of the task allocation algorithm provided the optimum task allocation details for each worker, along with an ergonomic score for each worker-task pairing. Before optimization, the ergonomic scores are as provided in Table 2 (below). Further, Table 3 (below) provides the ergonomic scores post optimization in form of task allocation output table in which, "Jack model 1" was allocated Task 3 with an ergonomic score of 64 (out of 100), "Jill model" was allocated Task 2 with an ergonomic score of 83 (out of 100), and "Jack model 2" was allocated Task 1 with an ergonomic score of 54 (out of 100). These ergonomic scores reflect the overall suitability of each task allocation, considering the worker's physical abilities and the ergonomic analysis of the task. This exemplary implementation demonstrates how the method 100 can consider various worker characteristics, task requirements, and ergonomic factors to determine an optimized task allocation that promotes worker well-being and overall workplace efficiency.

**Table 2: Before Optimization**

| Worker | Allocated Task | Ergonomic Score |
|---|---|---|
| Jack model 1 | Task 1 | 70 |
| Jill model | Task 2 | 82 |
| Jack model 2 | Task 3 | 36 |

**Table 3: Post optimization**

| Worker | Allocated Task | Ergonomic Score |
|---|---|---|
| Jack model 1 | Task 3 | 64 |
| Jill model | Task 2 | 83 |
| Jack model 2 | Task 1 | 54 |

In the given examples, for optimal task allocation, the sustainability score is considered to be 73 (out of 100) or more. Further, the social sustainability index will be calculated for the complete combination of allocated task provided by the algorithm. The social sustainability index will be calculated by considering the total ergonomic score and other factors in environment such as noise, illumination, temperature etc.

The computer-implemented method 100 for managing task allocation to workers in a work environment of the present disclosure is implemented optimizing workplace efficiency and worker well-being. The method 100 provides comprehensive approach, which considers a wide range of worker attributes including physical conditions, medical history, allergies, age, gender, and anthropometric measures. By simulating tasks for ergonomic analysis and providing optimum task allocation with subsequent validation, the method 100 measures and improves the social sustainability of the manufacturing plant. This approach ensures that task allocation is efficient and aligned with the individual capabilities and limitations of each worker.

The method 100 offers advantages over existing solutions in several key areas. The method 100 enhances worker well-being by integrating workers' differences into the task allocation process, leading to improved worker comfort and a reduced risk of work-related injuries. The method 100 also improves overall efficiency by optimizing task allocation based on worker characteristics, task requirements, and ergonomic considerations. This results in improved workflow efficiency and increased productivity. The method 100 further enables the quantification of social sustainability through key performance indicators such as the Weighted ergonomic score and Working Environment Factors. These objective metrics allow for a data-driven approach to monitor and improve the social impact of the work environment.

Furthermore, the method 100 offers cost optimization benefits through simulation-based evaluation of task allocation strategies before implementation. This approach helps identify and address potential inefficiencies and ergonomic risks early in the process, leading to cost savings during implementation. The scalability and adaptability of the method 100 make it suitable for both green field and brown field scenarios, with the ability to utilize video analytics and point cloud data for existing infrastructure. The method 100, which incorporates digital twin models, simulation, ergonomic reports, and task allocation algorithms, ensures efficient task allocation while considering worker capabilities and limitations, resulting in improved performance, worker satisfaction, and cost-effectiveness.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Reference Numerals**

| | |
|---|---|
| method | 100 |
| step | 102 |
| step | 104 |
| step | 106 |
| step | 108 |
| step | 110 |
| step | 112 |
| step | 114 |
| step | 116 |
| system | 200 |
| bus | 202 |
| processing unit | 204 |
| memory unit | 206 |
| interface | 208 |
| database | 210 |
| input device | 212 |
| output device | 214 |
| task allocation optimization module | 216 |
| process | 300 |
| worker data | 302 |
| operational data | 304 |
| recommendation engine | 310 |
| step | 312 |
| step | 314 |
| step | 316 |
| step | 318 |
| step | 320 |
| step | 322 |
| metaverse environment | 330 |
| step | 332 |

## Claims

1. A computer-implemented method (100) for managing task allocation to workers in a work environment, the method (100) comprising implementing a processing unit for:
receiving, from a database, worker data comprising at least one of physical characteristics information, limitations information and skill sets information of workers;
generating digital twin worker models representing individual workers based on the worker data;
generating task models representing tasks in the work environment;
simulating assignment of each digital twin worker model to each task model;
processing results of the simulations to generate ergonomic analysis reports, including key performance indicators for assessing one or more of worker comfort, safety, and productivity;
determining a worker-task matrix quantifying worker-task compatibility based on the key performance indicators;
applying an optimization algorithm to the worker-task matrix to determine an optimized task allocation; and
performing one or more task allocation actions based on the optimized task allocation.

2. The method (100) according to claim 1, wherein the one or more task allocation actions comprise sending an electronic notification to a user device associated with at least one of a worker or a supervisor, the electronic notification including information about the allocated task.

3. The method (100) according to any of the preceding claims, wherein the one or more task allocation actions comprise configuring equipment on which a worker is to perform an allocated task, based on the worker data associated with the worker.

4. The method (100) according to any of the preceding claims, further comprising:
capturing, from an imaging source, video data and/or point cloud data of the work environment; and
generating the task models by utilizing the video data and point cloud data.

5. The method (100) according to claims 1 and 4, wherein the task models are generated based on the video data and/or point cloud data captured from assembly operations, logistics operations, quality inspection, and maintenance activities in the work environment.

6. The method (100) according to any of the preceding claims, further comprising:
training workers on the tasks allocated based on the optimized task allocation in a virtual reality and/or an augmented reality environment; and
evaluating worker performance in the virtual reality environment and/or the augmented reality environment to validate the optimized task allocation.

7. The method (100) according to claims 1 and 6, further comprising:
adjusting one or more parameters of the digital twin worker models based on the evaluation of worker performance in the virtual reality environment and/or the augmented reality environment; and
re-executing the simulation of the assignment, generation of the ergonomic analysis reports, and application of the optimization algorithm using the modified digital twin worker models to update the optimized task allocation.

8. The method (100) according to any of the preceding claims, wherein the key performance indicators comprise a weighted ergonomic score quantifying overall ergonomic performance of each task allocation scenario and a work environment score based on thermal conditions, acoustic conditions, and lighting conditions, and wherein the weighted ergonomic score is user-defined or pre-defined.

9. The method (100) according to any of the preceding claims, wherein:
the physical characteristics information comprises at least one of age, gender, height, weight, body dimensions, reach, and strength;
the limitations information comprises at least one of physical limitations, cognitive limitations, and sensory limitations; and
the skill sets information comprises at least one of experience level, certifications, training history, and tools or equipment proficiency details.

10. A system (200) comprising:
a database (210) storing worker data;
one or more input devices (212) configured to receive video data and/or point cloud data of a work environment;
one or more processing units (204); and
a memory unit (206) communicatively coupled to the one or more processing units (204), wherein the memory unit (206) comprises a task allocation optimization module (216) stored in the form of machine-readable instructions executable by the one or more processing units (204), wherein the task allocation optimization module (216) is configured to perform method (100) steps for managing task allocation to workers in a work environment, according to any of the claims 1 to 9.

11. A computer-program product having machine-readable instructions stored therein, which when executed by one or more processing units (204), cause the one or more processing units (204) to perform a method (100) according to any of the claims 1 to 9.
